(19) **Europäisches Patentamt**

**European Patent Office**

**Office européen des brevets**

(11) **EP 0 962 793 A1**

(12) **EUROPEAN PATENT APPLICATION**

(43) Date of publication:
08.12.1999 Bulletin 1999/49

(51) Int. Cl.$^6$: **G02B 6/34**

(21) Application number: **99109156.2**

(22) Date of filing: **10.05.1999**

<table>
<tr><td>

(84) Designated Contracting States:
**AT BE CH CY DE DK ES FI FR GB GR IE IT LI LU MC NL PT SE**
Designated Extension States:
**AL LT LV MK RO SI**

(30) Priority: **13.05.1998 US 78034**

(71) Applicant: **JDS FITEL INC.**
**Nepean, Ontario K2G 5W8 (CA)**

</td><td>

(72) Inventor: **Delisle, Vincent**
**Ottawa, Ontario K2C 3L6 (CA)**

(74) Representative:
**Frei, Alexandra Sarah**
**Frei Patentanwaltsbüro**
**Postfach 768**
**8029 Zürich (CH)**

</td></tr>
</table>

(54) **Waveguide grating router**

(57) Two or more phased array waveguides are arranged such that they are interlaced in parallel both connecting the same two star couplers. Each phased array focuses the output channels to a different location. The separation between the two focus points is determined by a constant difference in the length of each individual array. A shift can be controlled very precisely to produce overlapping passbands while keeping low excess crosstalk between adjacent channel. The overlapping passbands effectively create a broader passband with a substantially flat top shape.

Fig. 2

## Description

### Field of the Invention

The present invention relates to a phased array grating such as used in optical multiplexer / demultiplexers, for achieving a flat and broad spectral response in the transmission spectrum, particularly a phased array grating including two or more interlaced optical waveguide arrays connecting two star couplers for providing overlapping focus points and consequently a broader channel spectrum.

### Background of the Invention

Phased arrays are used for switching, multiplexing and demultiplexing a multiple channel signal, as disclosed by Dragone in United States patent No. 5,002,350 issued in 1991. A typical phased array demultiplexer comprises a pair of star couplers joined by a phased array grating of curved parallel waveguides each having a different length. Lengths are selected for the arms of the grating to manipulate the phase of selected wavelengths. A signal comprised of multiple channels of different wavelengths is input from a single waveguide into one of the star couplers after passing through the phased ray, the signal is refocused by a wavelength dependent constructive interference resulting in each separate wavelength being focused to a different location. Output waveguides can be positioned at each focus point to pick up a signal for each channel. In an opposite direction, multiple channels may be launched from a plurality of waveguides into the array to be picked up as a single signal in the single waveguide.

To facilitate channel pick-up, the physical separation of focus points is selected to provide for as many channels as possible, positioned as close together as possible without encountering excessive crosstalk between channels.

A problem arises because it is difficult to accurately control the wavelength of each individual channel being multiplexed or demultiplexed that has been generated by a laser source. For example, variation in the fabrication process parameters, temperature drift, injected current and aging are some factors influencing fluctuation in the wavelength of a laser source. Individual channel transmission response produced by a phased ray as proposed by Dragone exhibits a Gaussian shape having a fixed and a narrow bandwidth to wavelength channel separation ratio. Thus, if the wavelength of a desired channel is not precisely centered within the transmission region, complete channel pickup will not occur, as portions of the signal outside the Gaussian limits are not transmitted.

When changes in temperature in the laser or the array cause a channel frequency to drift, a part of the signal is not transmitted and lost between two pickup waveguides at the output of the second star coupler. It is desired to pick up as much of each of the demultiplexed channels as possible without encountering excess crosstalk between channels. To increase the possible bandwidth where a channel may be transmitted without loss, it is desired to provide a flat spectral response, where maximum transmission can occur over a wider range of wavelengths. A flat spectral response would tolerate frequency drift without experiencing as severe a degradation in performance. Ideally, a transmission response would have a rectangular shape, substantially as wide at full amplitude as at low amplitude and very high slope. A number of methods have been suggested to achieve this "flat top" response:

Branched input separates the input signal physically through two input waveguides to two locations, the two separated signals travel from the inputs through the array to produce two focus points for each channel. In the instance that the two input beams are within different grating orders, it is very difficult to control the phased array process parameters in order to control a desired bandwidth. In contrast, two input beams in the same grating order would be so close that it would be difficult to prevent coupling between them, thereby resulting in undesired effects such as side lobes and modulation of the spectrum.

In a paper, "Arrayed-waveguide grating multiplexer with flat spectral response," Optics Letters, vol. 20, no. 1, Jan 1, 1995, Okamoto and Yamada disclose a sin(x)/x function used to calculate array lengths to produce flatter spectral response. Bandwidth is increased to approximately 3 times that of a conventional arrayed waveguide multiplexer. However, it is difficult to control both the phase and the transmission of each of the phased ray waveguides. This lack of control results in undesired signal losses.

Pre-filtering of the input signal to remove an extreme portion cyclically using an asymmetric Mach-Zenhder device also has been used to create a flatter response over a wider passband. Although available bandwidth will still be limited, this hybrid approach increases the complexity since one has to ensure that the pre-filter will follow the wavelength shift of the grating over temperature variations.

Alternatively, a multimode interference coupler (MMI) can be used to produce a two or more input beam spots. However the MMI technology is not compatible with all types of process for phased arrays. For example, some MMI implementations for specific phased array grating process will show high wavelength sensitivity and hence, reduce the number of possible output channels.

### Summary of the Invention

The present invention has found that two or more phased arrays may be ranged interlaced in parallel both connecting the same two star couplers. Each phased array focuses the output channels to a different location. The separation between the two focus points is determined by a constant difference in the length of the interlaced phased rays. A shift can be controlled very precisely to produce wider passbands while keeping a low crosstalk between channels. The overlapping passband shape effectively creates a broader passband with a substantially flat top.

Accordingly, the present invention provides a phased array comprising:

a first star coupler
a second star coupler
an optical interlaced phased ray grating for transmitting a signal from the first star coupler to a second star coupler comprising a first ray comprising a plurality of $N_1$ curved optical waveguides each waveguide further having a predetermined different length substantially equal to $L_1+n\ \Delta L_1$, where $L_1$ is a predetermined initial length, n is the waveguide number such that $0 \leq n \leq N_1$-1 and $\Delta L_1$ is a predetermined length increment fixing the grating dispersion, and
at least one additional ray comprising a plurality of $N_2$ curved optical waveguides, interlaced between the first array, each waveguide of the at least one additional ray having a length $L_2+m\ \Delta L_2$, where $L_2$ is a predetermined initial length different from $L_1$, m is the waveguide number such that $0 \leq m \leq N_2$-1 and $\Delta L_2$ is a predetermined length increment fixing the grating dispersion, whereby a signal received in a first star coupler is transmitted by the first and the at least one additional arrays to separate different wavelengths of the signal, the focus of the first and of the at least one additional arrays being different, but not exceeding the channel separation, and whereby the focus of the first and the at least one additional arrays partially overlap.

In a further preferred embodiment of the phased array described above, $\Delta L_2$ is the same length increment as $\Delta L_1$.

In a further embodiment of the present invention an optical waveguide grating comprises:

a plurality of curved adjacent waveguides having consecutive numbers i, each waveguide having a different length, an initial waveguide having the minimum length $L_0$, subsequent waveguides i being increased by an increment, the length of each additional waveguide being expressed: $L_i = L_0 + i\Delta L_0 + mod(i,M)\ \Delta L$, where M is an integer $>0$ and mod is the modulus function defined as $mod(x,y) = x-y*floor(x/y)$ and $\Delta L_0$ is a predetermined length increment fixing the grating dispersion and $\Delta L$ is a predetermined length increment fixing the wavelength shift between the two arrays.

Advantageously, a broadened transmission response can be achieved and precisely determined while keeping a low crosstalk level between channel signals.

Further advantages will be apparent to persons of skill in the art with reference to the following detailed description and figures, by way of example only, in which:

**Brief Description of the Figures**

Figure 1 depicts a phased array waveguide optical grating, as is typical in the art;
Figure 2 is a schematic illustration of the arms of the grating in accordance with the present invention having two arrays interlaced;
Figure 3 is a graph illustrating the simulated spectral response of a prior art optical grating; and,
Figure 4 is a graph illustrating the simulated spectral response of an optical grating in accordance with the present invention.

**Detailed Description of Preferred Embodiments**

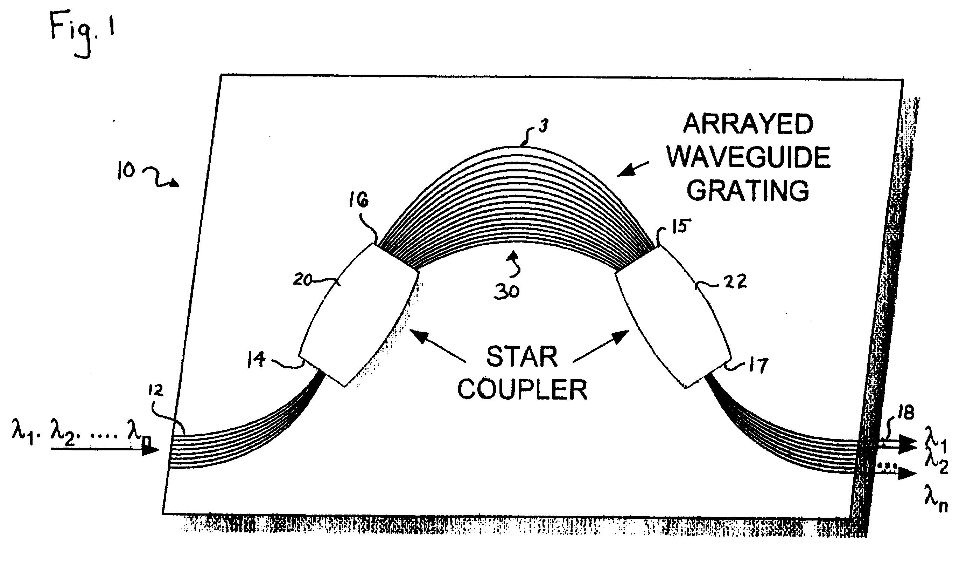

An optical phased ray waveguide grating is an optical interconnection apparatus which is capable of optical multiplexing, and demultiplexing many communication channels of different wavelengths. Looking at Figure 1, in a common phased array grating 10 a plurality of closely spaced input waveguides 12 communicate with the input 14 of a star coupler 20. The output 16 of the star coupler 20 communicates with an optical waveguide grating 30 comprising a series of optical waveguides 3, each of the waveguides, called arms, differing in length with respect to its nearest neighbor by a predetermined amount. The grating 30 is connected to the input 15 of a second star coupler 22, the outputs 17 of which are coupled to the outputs 18 of the multiplexing and demultiplexing apparatus. As a bi-directional device, inputs and outputs are reversible, thus for a signal travelling in the opposite, multiplexing, direction outputs become inputs, and inputs become outputs.

The geometry of such an apparatus is such that a plurality of separate and distinct wavelengths each launched into a separate and distinct input port 18 of the apparatus will all combine and appear on a predetermined one of the output ports 12. In this manner the apparatus performs a multiplexing function. The same apparatus may also perform a demultiplexing function. In this situation, a plurality of input wavelengths is directed to a predetermined one of the input ports 12 of the apparatus 10. Each of the input wavelengths is separated from the others and focused to a predetermined location where one the output ports 18 of the apparatus are located. An appropriate selection of input wavelength also permits switching between any selected input port to any selected output port. Such a grating 30 can also be used without one or both star couplers 20, 22 as a simple dispersive element.

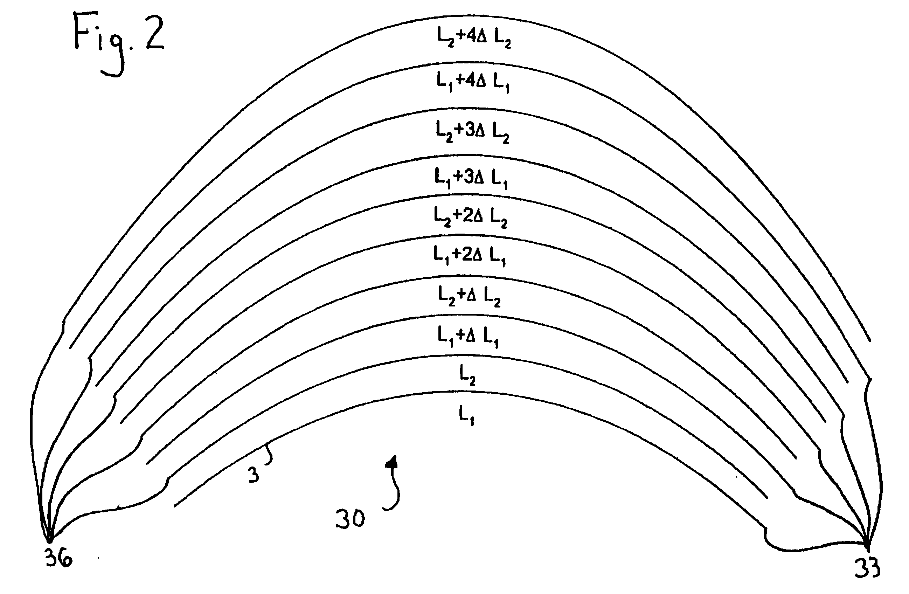

In the present invention, the arms 3 of the phased array have been adjusted in length to produce two or more focus points for each wavelength. Figure 2 illustrates an example of a grating in accordance with the present invention having two interlaced rays. An initial length $L_1$ can be described as the base for a first ray 33. A second initial length $L_2$ different from $L_1$ can be described as the base for a second ray 36. The difference between $L_2$ and $L_1$ determines the shift in the focal point position of the two arrays. The next arm is determined from the first length $L_1$ + a fixed amount $\Delta L_1$ for the desired wavelength dispersion. The next arm is determined from the second length $L_2$ + a fixed amount $\Delta L_2$. The length increments $\Delta L_1$ and $\Delta L_2$ may be equal or different lengths. Alternating arms are likewise calculated in this fashion, adding $\Delta L_1$; $2\Delta L_1$; $3\Delta L_1$ etc. to initial lengths $L_1$, forming the first array 33, and to $L_2$ adding $\Delta L_2$; $2\Delta L_2$; $3\Delta L_2$ etc. forming the second array 36. Both arrays 33, 36, however, are fully interconnected between the same star couplers 20,22 and input and output waveguides 12, 18, producing two overlapping focal points for each wavelength. The difference between $L_2$ and $L_1$ is selected to shift the focus sufficiently to create an overlapping response to broaden the transmission region for each channel wavelength of the array.

The chromatic dispersion in any conventional arrayed waveguide grating results from an incremental increase of the length of each waveguide of the array given by: $L_i = L_0 + i\Delta L_0$, where $L_i$ is the length of each waveguide, i is the waveguide number, $L_0$ is the minimum length of a waveguide, and $\Delta L_0$ is the added length increment. This results in a linear dispersion. To determine the arm length in accordance with the present invention extra length or phases are added to the waveguides periodically with a period of M waveguides. That can be formally written:
$L_i = L_0 + i\Delta L_0 + \text{mod}(i,M) \Delta L$ where M is an integer greater than 0, $\Delta L$ is the added waveguide length, and mod is the modulus function defined as $\text{mod}(x,y) = x - y*\text{floor}(x/y)$.

In effect this creates M interlaced arrayed waveguide gratings having the same dispersion, but at slightly different angles. The difference in angles causes wavelength shifts between the interlaced arrayed waveguide gratings resulting in a broadening of the channel shape.

Good results are achieved with flat channel shape for an M value of 2, and $\Delta L$ equivalent to a frequency shift of about .3 times the channel pitch. Different values for M determine the number of interlaced arrays. Example modulus values for waveguide numbers i are given in the following tables:

| M=2 | | M=3 | |
|---|---|---|---|
| | Mod(i,M) | | Mod(i,M) |
| i= 0 | 0 | i= 0 | 0 |
| 1 | 1 | 1 | 1 |
| 2 | 0 | 2 | 2 |
| 3 | 1 | 3 | 0 |
| 4 | 0 | 4 | 1 |
| 5 | 1 | 5 | 2 |
| 6 | 0 | 6 | 0 |

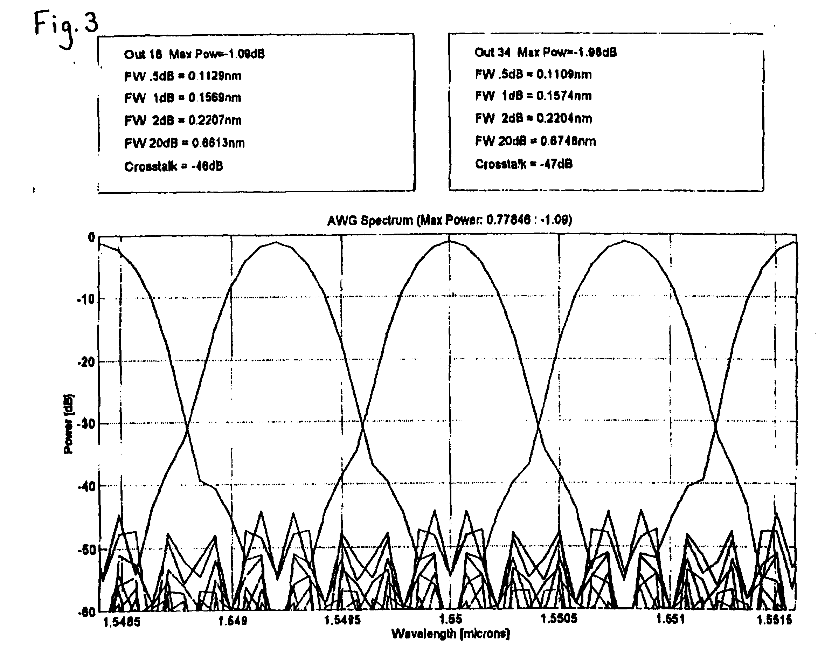

An example of the conventional channel shape is shown graphically in Figure 3 as the transmission intensity in decibels versus the optical wavelength in microns. The spectral channel shape is mainly determined by the overlap integral of the output mode field at 17 and the mode field of the output waveguide 18. Since both can be approximated by a Gaussian distribution, the resulting mode also has a Gaussian shape wherein a certain bandwidth is fixed for a particular channel pitch or separation. In the present example, the one dB bandwidth for a pitch of 0.8mm between channels is 0.157nm.

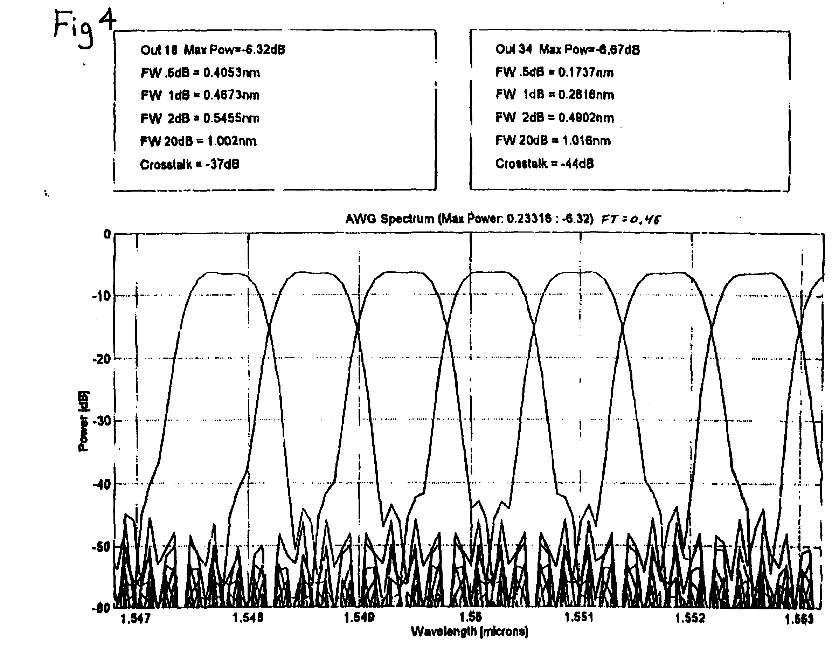

In contrast seen in Figure 4, channel shapes resulting in accordance with the present invention exhibit a broader flatter top. For the same 0.8 nm pitch between channels, the 1 dB bandwidth is 0.281 nm. The interlaced phased array thus gave us a bandwith increase of 79%.

Numerous alternative embodiments will be apparent to persons of skill in the art without departing from the spirit and scope of the invention as defined in the claims attached.

**Claims**

1. A phased array optical grating comprising:

   a first star coupler
   a second star coupler
   an optical waveguide grating for transmitting a signal from the first star coupler to a second star coupler comprising a first ray comprising a plurality of $N_1$ curved optical waveguides each waveguide further having a predetermined different length substantially equal to $L_1 + n \Delta L_1$, where $L_1$ is a predetermined initial length, n the waveguide number such that $0 \leq n \leq N_1 - 1$ and $\Delta L_1$ is a predetermined length increment greater than zero, and at least one additional ray comprising a plurality of $N_2$ curved optical waveguides, interlaced between the first ray, each waveguide of the at least one additional array having a length $L_2 + m \Delta L_2$, where $L_2$ is a predetermined initial length, m the waveguide number such that $0 \leq m \leq N_2 - 1$ and $\Delta L_2$ is a predetermined length increment greater than zero; whereby a signal received in a first star coupler is transmitted by the first and the at least one additional arrays to separate different wavelengths of the signal, the focus of the first and of the at least one additional rays being different, but not exceeding the channel separation, and whereby the focus of the first and the at least one additional arrays partially overlap.

2. A phased ray waveguide grating as defined in claim 1 where $\Delta L_1$ is equal to $\Delta L_2$.

3. A phased ray waveguide grating as defined in claim 1 where $\Delta L_1$ is not equal to $\Delta L_2$.

4. An optical waveguide grating comprising:

a plurality of curved adjacent waveguides having consecutive numbers i, each waveguide having a different length, an initial waveguide having the minimum length $L_0$, subsequent waveguides i being increased by an increment, the length of each additional waveguide being expressed: $L_i = L_0 + i \Delta L_0 + mod(i,M) \Delta L$, where M is an integer $>0$ and mod is the modulus function defined as $mod(x,y) = x - y \cdot floor(x/y)$ and $\Delta L_0$ is a predetermined length increment greater than 0 and $\Delta L$ is a second predetermined length increment greater than 0.

5. A phased array waveguide grating as defined in claim 4, wherein M = 2.

6. A phased array waveguide grating as defined in claim 4, wherein M = 3.

7. A phased array waveguide grating comprising:

two or more phased arrays arranged interlaced in parallel, each array providing focal points of the output channels in a different overlapping location, a separation between overlapping focal points locations being determined by a constant difference in the length of the two or more parallel phased arrays to create a broader passband with a substantially flat top.

8. A phased array waveguide grating as defined in claim 4 or 7 for use as a simple dispersive element without the use of one or both star couplers.

9. A phased array grating comprising:

a plurality of waveguide arms each having a different length, the lengths being selected to provide at least two overlapping focus points for each channel wavelength to broaden the passband region for each channel comprising:

an initial length $L_1$ defining a first array;
at least an initial length $L_n$ defining at least a second array, having a length different from $L_{n-1}$, for producing a desired shift in focal points;
a predetermined increment $\Delta L_1$ added to the length $L_1$ in integer multiples; at least a predetermined length increment $\Delta L_n$ added to the at least one length $L_n$ in integer multiples;
alternating arm lengths being calculated for a first array from $L_1$ by adding integer multiples of $\Delta L_1$, and for the at least second array from $L_n$ by adding integer multiples of $AL_n$.

Fig. 1

10

ARRAYED WAVEGUIDE GRATING

3

16

15

20

22

30

14

17

STAR COUPLER

12

18

$\lambda_1, \lambda_2, \dots, \lambda_n$

$\lambda_1$
$\lambda_2$
$\lambda_n$

EP 0 962 793 A1

# Fig. 2

$L_2 + 4\Delta L_2$

$L_1 + 4\Delta L_1$

$L_2 + 3\Delta L_2$

$L_1 + 3\Delta L_1$

$L_2 + 2\Delta L_2$

$L_1 + 2\Delta L_1$

$L_2 + \Delta L_2$

$L_1 + \Delta L_1$

$L_2$

$L_1$

33

36

3

30

Fig. 3

EP 0 962 793 A1

Out 18  Max Pow=-1.09dB

FW .5dB = 0.1129nm

FW 1dB = 0.1569nm

FW 2dB = 0.2207nm

FW 20dB = 0.6613nm

Crosstalk = -46dB

Out 34  Max Pow=-1.98dB

FW .5dB = 0.1109nm

FW 1dB = 0.1574nm

FW 2dB = 0.2204nm

FW 20dB = 0.6748nm

Crosstalk = -47dB

AWG Spectrum (Max Power: 0.77846 : -1.09)

Power [dB] vs Wavelength (microns)

## Fig 4

EP 0 962 793 A1

Out 18  Max Pow=-6.32dB

FW .5dB = 0.4053nm

FW 1dB = 0.4673nm

FW 2dB = 0.5455nm

FW 20dB = 1.002nm

Crosstalk = -37dB

Out 34  Max Pow=-6.67dB

FW .5dB = 0.1737nm

FW 1dB = 0.2816nm

FW 2dB = 0.4902nm

FW 20dB = 1.016nm

Crosstalk = -44dB

AWG Spectrum (Max Power: 0.23316 : -6.32)  FT = 0.45

**European Patent Office**

**EUROPEAN SEARCH REPORT**

Application Number

EP 99 10 9156

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 831 346 A (FRANCE TELECOM) 25 March 1998 (1998-03-25) * the whole document * | 1-9 | G02B6/34 |
| A | US 5 467 418 A (DRAGONE CORRADO) 14 November 1995 (1995-11-14) * column 5, line 61 - column 6, line 24; figure 9 * | 1-9 | |

TECHNICAL FIELDS SEARCHED (Int.Cl.6)

G02B

The present search report has been drawn up for all claims

| Place of search | Date of completion of the search | Examiner |
|---|---|---|
| MUNICH | 7 September 1999 | Lerbinger, K |

**ANNEX TO THE EUROPEAN SEARCH REPORT
ON EUROPEAN PATENT APPLICATION NO.** EP 99 10 9156

This annex lists the patent family members relating to the patent documents cited in the above-mentioned European search report.
The members are as contained in the European Patent Office EDP file on
The European Patent Office is in no way liable for these particulars which are merely given for the purpose of information.

07-09-1999

| Patent document cited in search report | | Publication date | Patent family member(s) | | Publication date |
|---|---|---|---|---|---|
| EP 0831346 | A | 25-03-1998 | FR | 2753803 A | 27-03-1998 |
| | | | JP | 11002735 A | 06-01-1999 |
| US 5467418 | A | 14-11-1995 | AU | 3037495 A | 14-03-1996 |
| | | | CA | 2155258 A | 03-03-1996 |
| | | | EP | 0699928 A | 06-03-1996 |
| | | | JP | 8076155 A | 22-03-1996 |

EPO FORM P0459

For more details about this annex : see Official Journal of the European Patent Office, No. 12/82